(19) Europäisches Patentamt
European Patent Office
Office européen des brevets

(11) **EP 3 333 969 A1**

(12) **EUROPEAN PATENT APPLICATION**

(43) Date of publication:
**13.06.2018 Bulletin 2018/24**

(51) Int Cl.:
*H01Q 1/22* (2006.01)    *G01R 19/25* (2006.01)
*H01Q 1/46* (2006.01)    *H01Q 9/06* (2006.01)
*G06K 19/07* (2006.01)

(21) Application number: **16306628.5**

(22) Date of filing: **06.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **THOMSON Licensing
92130 Issy-les-Moulineaux (FR)**

(72) Inventors:
• **LOUZIR, Ali
35576 Cesson-Sévigné Cedex (FR)**

• **SADIQ, Mohammad
35576 Cesson-Sévigné Cedex (FR)**
• **KUMAR, Rupesh
35576 Cesson-Sévigné Cedex (FR)**
• **LE NAOUR, Jean-Yves
35576 Cesson-Sévigné Cedex (FR)**

(74) Representative: **Huchet, Anne
TECHNICOLOR
1-5, rue Jeanne d'Arc
92130 Issy-les-Moulineaux (FR)**

(54) **METHOD AND APPARATUS FOR HARVESTING AN ENERGY FROM A POWER CORD**

(57)    A method for harvesting an energy from a power cord is disclosed. A salient idea of the present principles is to adapt the antenna of a wireless tag device such as for example a RFID tag device so as to harvest an energy from a power cord and to power the wireless tag with the harvested energy. The disclosed principles propose to combine in a single antenna a classical antenna function of radio frequency signals reception to a new function of energy harvesting from a power cord. Including a RF antenna function in a pair of electrodes adapted to harvest power from a power cord is advantageous as it enables to design and/or manufacture simpler and cheaper devices, using less material than the existing methods. The antenna being a dipole type antenna comprises four conductive strips that are wrapped around the power cord. The antenna shape and size are so that, when wrapped around the power cord, the antenna acts as an efficient antenna for the communication band (such as for example the UHF band) as well as an efficient electrical field energy harvester. The harvested energy is used to power the wireless tag device or to boost the range performances of the wireless tag, through the powering of its communication circuitry.

Figure 4a

**Description**

1. TECHNICAL FIELD

The technical field of the disclosed method and apparatus is related to energy harvesting for devices such as sensors embedded in RFID tags.

2. BACKGROUND ART

Smart home and smart building applications generally rely on deploying battery powered sensors in the home or building environment so as to measure and collect data in order to provide enhanced services. A huge variety of such sensors emerge as part of the Internet of Things trend, and include measurement of for example temperature, pressure, humidity, or magnetic field. Such sensors further include for example presence detection or door/window opening status detection. There are known methods where such a battery powered sensor is coupled to a RFID tag that is able to report a value measured by the sensor towards a RFID interrogator. A first drawback of battery powered sensors is the cost of the battery which impacts the cost of the whole solution. A second drawback is the required maintenance of the system: batteries need to be monitored and regularly changed. These drawbacks represent significant barriers in the deployment of low cost and ease of use sensors dedicated to smart home applications. New methods and sensor devices are desired for measuring and reporting values without requiring the sensor device to be battery powered.

3. SUMMARY

A salient idea of the present principles is to adapt the antenna of a wireless tag device such as for example a RFID tag device so as to harvest an energy from a power cord and to power the wireless tag with the harvested energy. The disclosed principles propose to combine in a single antenna a classical antenna function of radio frequency signals reception to a new function of energy harvesting from a power cord. Including a RF antenna function in a pair of electrodes adapted to harvest power from a power cord is advantageous as it enables to design and/or manufacture simpler and cheaper devices, using less material than the existing methods. The antenna being a dipole type antenna comprises four conductive strips that are wrapped around the power cord. The antenna shape and size are so that, when wrapped around the power cord, the antenna acts as an efficient antenna for the communication band (such as for example the UHF band) as well as an efficient electrical field energy harvester. The harvested energy is used to power the wireless tag device or to boost the range performances of the wireless tag, through the powering of its communication circuitry, and/or to supply a sensor embedded in the wireless tag device with a required energy for its working and for storing/updating the sensed information in a memory of the wireless tag device.

To that end a device adapted to harvest an energy from a power cord is disclosed. The device comprises a dipole type antenna of two arms adapted to receive a RF signal, wherein each of the two arms comprises two conductive strips adapted to:

- be wrapped around a power cord with a separating slot keeping the two conductive strips electrically disconnected,
- harvest an energy from the power cord

According to a particularly advantageous variant, the separating slot is short and the two conductive strips are electromagnetically coupled.

According to another particularly advantageous variant, each of the two conductive strips comprises a flexible substrate.

According to another particularly advantageous variant, the device is configured to operate at a central radio frequency, each of the two conductive strips having an equal length being a quarter of a guided wavelength of the central radio frequency.

According to another particularly advantageous variant, the device further comprises an integrated circuit adapted to receive an operating energy from a modulated RF carrier captured by the dipole type antenna, the integrated circuit being further adapted to be powered by the harvested energy.

According to another particularly advantageous variant, the device is a wireless tag.

According to another particularly advantageous variant, the device is a RFID tag.

According to another particularly advantageous variant, the device further comprises a capacitor adapted to store the harvested energy.

According to another particularly advantageous variant, the device further comprises an impulse detector (57) adapted to be powered at least by the harvested energy.

According to another particularly advantageous variant, at least one of the two conductive strips comprises a plurality of spikes inserted in an insulating envelope of the power cord.

According to another particularly advantageous variant, the at least one of the two conductive strips comprises a first rectangular conductive part, the spikes originating from the first rectangular conductive part and being perpendicular to the first rectangular conductive part.

According to another particularly advantageous variant, the at least one of the two conductive strips comprises a first conductive part being partially cylindrical around an axis, the spikes originating from the first conductive part and being directed towards the axis.

In a second aspect a method for powering a device is also disclosed, the device comprising a dipole type antenna of two arms adapted to receive a RF signal, each of the two arms comprising two conductive strips. The method comprises:

- wrapping the two conductive strips around a power cord with a separating slot keeping the two conductive strips electrically disconnected;
- harvesting an energy from the power cord and
- powering the device with the harvested energy.

According to a particularly advantageous variant, the separating slot is short and the two conductive strips are electromagnetically coupled.

In a third aspect a device adapted to harvest an energy from a power cord is also disclosed. The device comprises at least two electrodes mounted around the power cord, wherein at least one of the two electrodes comprises a plurality of spikes inserted in an insulating envelope of the power cord.

According to a particularly advantageous variant, the at least one of the two electrodes comprises a first conductive part being partially cylindrical around an axis, the spikes originating from the first conductive part and being directed towards the axis.

According to another particularly advantageous variant, at least one spike is a blade of material along the axis.

According to another particularly advantageous variant, the spikes of the plurality of spikes have a same form.

According to another particularly advantageous variant, the spikes of the plurality of spikes are regularly distributed around the first conductive part.

According to another particularly advantageous variant,

- each spike occupies a surface of the first conductive part, the surface corresponding to a first angle of the partially cylindrical first conductive part;
- an interval between two consecutive spikes corresponds to a second angle of the partially cylindrical first conductive part, and
- a ratio of the first angle over a sum of the first angle and the second angle is between 1/2 and 2/3.

According to another particularly advantageous variant, the spikes are conductive, with a length being strictly smaller than a thickness of the insulating envelope.

According to another particularly advantageous variant, the spikes are of a dielectric material and inserted in the insulating envelope up to a conductive part of the power cord.

According to another particularly advantageous variant, the device is powered by the harvested energy.

According to another particularly advantageous variant, the device is powered by the harvested energy.

According to another particularly advantageous variant, the device is a wireless tag.

According to another particularly advantageous variant, the device is a RFID tag.

According to another particularly advantageous variant, the device further comprises a capacitor adapted to store the harvested energy.

According to another particularly advantageous variant, the device further comprises a sensor.

According to another particularly advantageous variant, the device further comprises an impulse detector.

In a fourth aspect a method for powering a device is also disclosed. The method comprises:

- mounting two electrodes around a power cord, wherein at least one of the two electrodes comprises a plurality of spikes inserted in an insulating envelope of the power cord;
- powering the device with an energy harvested from the power cord by the two electrodes.

While not explicitly described, the present embodiments may be employed in any combination or sub-combination. For example, the present principles are not limited to the described variants, and any arrangement of variants and embodiments of the electrodes can be used as an arm of the dipole type antenna. Moreover the present principles are not limited to the described conductive strips form examples. The present principles are not further limited to the described conductive material and are applicable to any other conductive material. The present principles are not further limited to the described forms of spikes examples or to the described positioning of spikes on the first conductive part and are applicable to any other forms and positioning of spikes. The present principles are not further limited to a RFID tag and any other type of tag is applicable to the disclosed principles.

Besides, any characteristic, variant or embodiment described for the device is compatible with a method for powering the device.

### 4. BRIEF DESCRIPTION OF THE DRAWINGS

- **Figure 1** illustrates an example of harvesting an energy from a power cord according to a known method;
- **Figures 2a** depicts an example of a cross-section view of the power cord of Figure 1;
- **Figures 2b** shows a modelling of the power cord of Figure 2a in an electrical circuit according to a specific and non-limiting embodiment of the disclosed principles;
- **Figure 2c** shows an equivalent electrical circuit of an electrical field energy harvester according to a specific and non-limiting embodiment of the disclosed principles;
- **Figure 2d** illustrates an application of the Thevenin Theorem to the electrical circuit of Figure 2c;
- **Figure 2e** shows plots of amounts of harvested energy evolution over time according to a specific and non-limiting embodiment of the disclosed principles;
- **Figure 3a, 3b, 3c, 3d** respectively describe a cross-section view of two electrodes adapted to harvest an energy from a power cord according to four specific and non-limiting embodiments of the present principles;
- **Figure 4a and 4b** illustrate two further specific and non-limitative embodiments of the disclosed principles;
- **Figure 5a, 5b and 5c** depict three RFID tag devices adapted to harvest an energy from a power cord according to respectively three specific and non-limiting embodiments of the disclosed principles;
- **Figure 6** describes a method for powering a device from energy harvested from a power cord according to a specific and non-limiting embodiment of the disclosed principles.

### 5. DESCRIPTION OF EMBODIMENTS

A possible approach to deploy battery less sensor devices is to harvest an energy, for example from a power cord. Indeed power cords are highly available in homes and buildings, so that relying on a power cord availability to deploy a sensing device does not represent a strong deployment constraint. Some methods are known to harvest an energy from power cords. Most of energy harvesters from power cords use magnetic coupling. This technique requires current flowing in the power cord which represents some limitations. Indeed the amount of energy harvested strongly depends on the amount of power being consumed by devices connected to the power cord. Some methods recently emerged for harvesting energy from power cords by using the electrical field. Such electric field energy harvesting techniques do not require current to flow in the power cord. The harvested energy is always available but remains relatively limited.

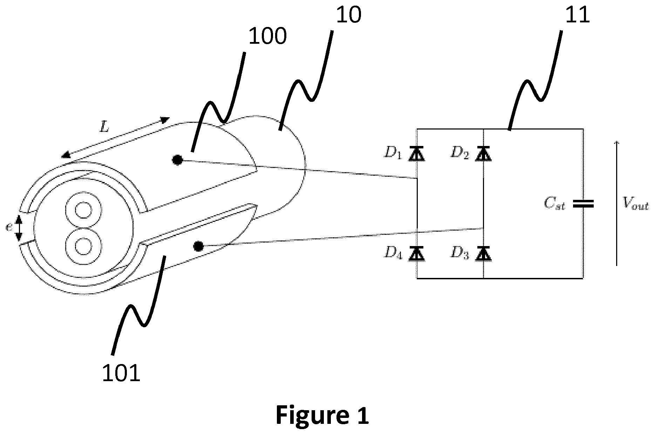

**Figure 1** represents an example of an electric field energy harvesting technique. The energy is harvested from two partially cylindrical electrodes 100 and 101 mounted around a power cord 10 over a length L and separated by a distance e. The energy harvested is stored in a storage module for example represented by an electrical diagram 11 comprising four diodes $D_1$, $D_2$, $D_3$, $D_4$ and a storage capacitor $C_{st}$. The amount of harvested energy for a given time duration, is directly related to the length L of the electrodes 100, 101 and remains limited for lengths below ten to fifteen centimeters.

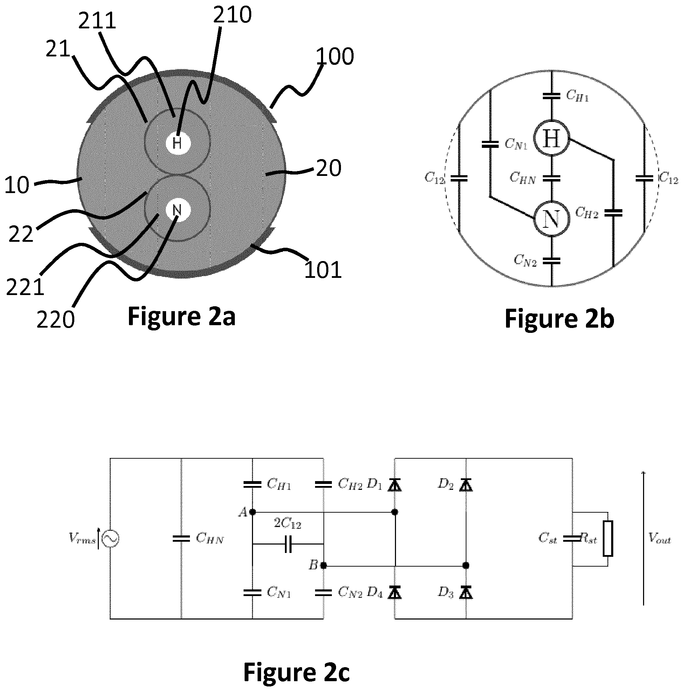

**Figure 2a** shows an example of a cross-section view of a power cord 10 with the two partially cylindrical electrodes 100, 101, supposed of length L, and **Figure 2b** shows the corresponding modeling in an electrical circuit. According to a specific and non-limiting embodiment, the power cord 10 comprises a hot wire 21 and a neutral wire 22, embedded into a main insulating envelope 20. The hot wire 21 comprises a conducting part 210, itself embedded into an individual insulating envelope 211. Similarly the neutral wire 22 comprises a conducting part 220, itself embedded into an individual insulating envelope 221. The two electrodes 100, 101 are capacitively coupled to the hot 21 and neutral 22 wires and an energy is harvested from the leakage electric field which generates a current corresponding to the displacement current according to Maxwell's equation. This current is used to charge a storage capacitor $C_{st}$ through a rectifying circuit using the diodes $D_1$, $D_2$, $D_3$, $D_4$ as shown in **Figure 1.** In **Figure 2b**, the coupling capacitors to the hot wire 21 are denoted $C_{H1}$ for the electrode 100 and $C_{H2}$ for the electrode 101. By the same way, the coupling capacitors to the neutral wire 22 are denoted $C_{N1}$ for the electrode 100 and $C_{N2}$ for the electrode 101. The coupling capacitor between the hot 21 and the neutral 22 wires is denoted $C_{HN}$. Finally $C_{12}$, denotes the direct coupling between both electrodes 100 and 101. In case the electrodes 100, 101 are symmetrical, the coupling capacitors $C_{H1}$ and $C_{N2}$ are of a same value ($C_{H1}=C_{N2}$), so as for the coupling capacitors $C_{H2}$ and $C_{N1}$ ($C_{H2}=C_{N1}$). In case the electrodes 100, 101 are of different size and/or form, the coupling capacitors have different values. Indeed, the values of these coupling capacitors depend on the exact geometry of the considered power cord 10 and the configuration of the electrodes 100, 101.

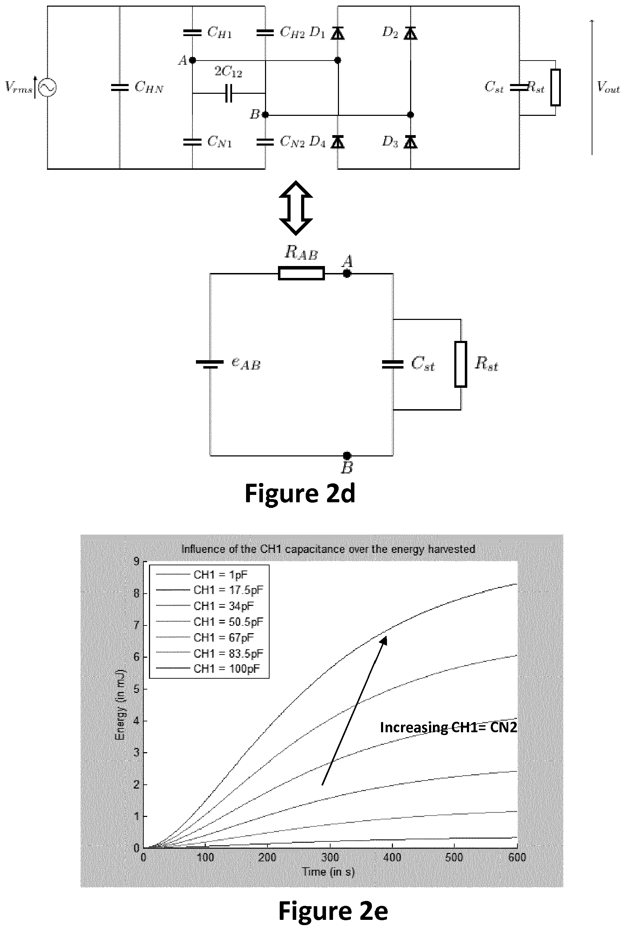

**Figure 2c** shows an equivalent electrical circuit of an electrical field energy harvester, merging the modelling of figures 1 and 2b. In figure 2c, by applying the Thevenin theorem illustrated in Figure 2d, the voltage at the edges of the storage capacitor $C_{st}$, denoted $V_{out}$, is calculated as:

- $V_{out} = Ge_{AB}\left(1 - \exp\left(-\frac{t}{\tau}\right)\right)$, where:

- $G = \dfrac{R_{st}}{R_{st}+R_{AB}}$ ; $R_{AB} = \dfrac{1}{2\pi f\, C_{eq}}$ ; $C_{eq} = \dfrac{(C_{H1}+C_{N1})(C_{H2}+C_{N2})}{(C_{H1}+C_{N1}+C_{H2}+C_{N2})} + 2C_{12}$

- $R_{st}$ represents the leakage resistance of the storage capacitor;

- $e_{AB} = A * V_{rms}$; $A = \dfrac{\frac{x-\frac{1}{x}}{x+1}}{1+\frac{1}{x}+\frac{2C_{12}}{C_{H1}}\left[x+1+\frac{1}{x+1}-\frac{x^2}{x+1}\right]}$ ; $x = \dfrac{C_{H1}}{C_{N1}}$

- $\tau = \dfrac{R_{st}R_{AB}}{R_{st}+R_{AB}}$

**Figure 2d** shows an application of the Thevenin Theorem, by replacing the passive circuit at the left side of terminals A-B, by the equivalent voltage source $e_{AB}$ and resistance $R_{AB}$. In this calculation, the resistances of the diodes of the rectifier (in serial with $R_{AB}$) are neglected, following a hypothesis of perfect diode. Therefore, for a given storage capacitor $C_{st}$, the harvested energy $E_h$ is given by:

$$E_h = \frac{1}{2}C_{st}V_{out}^2$$

**Figure 2e** shows examples of harvested energy evolution over time calculated using the above formulas for values of coupling capacitors $C_{H1}=C_{N2}$, varying from 1pF to 100 pF. For these calculations the storage capacitor $C_{st}$ value is chosen equal to 22$\mu$F. It appears clearly from Figure 2e, that the amount of harvested energy is directly related to the values of the coupling capacitors $C_{H1}$ and $C_{N2}$. The disclosed principles describe several specific and non-limiting embodiments where the geometry of the electrodes is advantageously adapted to increase the value of the coupling capacitors, so as to increase the amount of harvested energy.

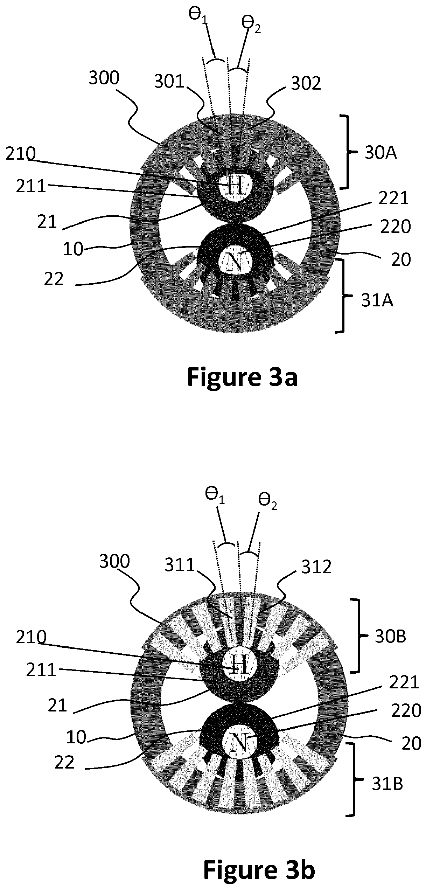

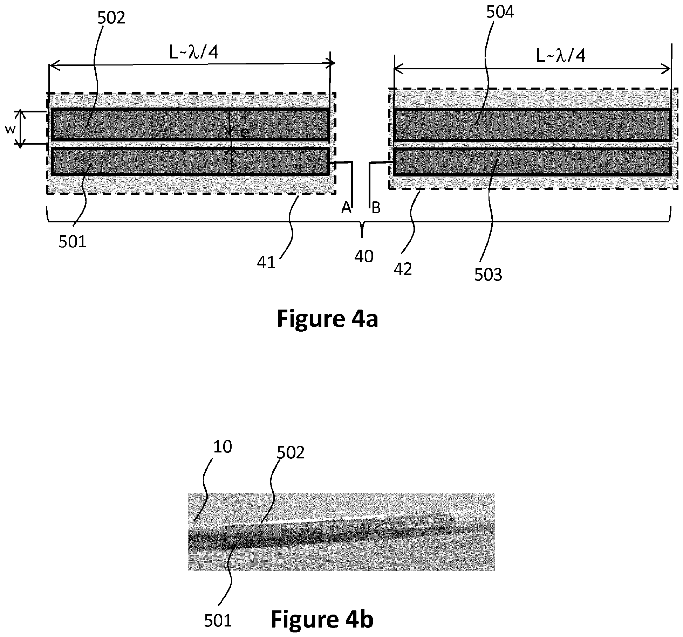

**Figure 3a** and **Figure 3b** illustrate a cross section of a device adapted to harvest an energy from a power cord 10 according to two specific and non-limiting embodiments of the disclosed principles. The device comprises at least two distinct electrodes 30A, 31 A, 30B, 31 B mounted around the power cord 10, and being electrically disconnected between each other. The figures 3a and 3b show a pair 30A-31 A of two electrodes (for figure 3a) and a pair 30B-31 B of two electrodes (for figure 3b), respectively mounted around the power cord 10. For the sake of clarity, the principles will be described with one pair of two electrodes 30A-31 A, 30B-31 B, but any number of pair of electrodes mounted around the power cord is compatible with the disclosed principles. In a first variant, at least one electrode 30A, 30B of a pair 30A-31A, 30B-31 B of electrodes comprises a plurality of spikes 301, 302, 311, 312 inserted in an insulating envelope 20, 211 of the power cord 10. In a second variant both electrodes 30A, 31A of a pair 30A-31A, are identical and comprise a same plurality of spikes, of a similar geometry. A similar geometry of both electrodes 30A, 31 A advantageously improves the capacitive coupling to the conductive parts 210, 220 of the wires 21 and 22.. The power cord 10 illustrated in figures 1, 2a and 3a-3b comprises two types of insulated envelopes: an individual insulating envelope 211, 221 around each of the conductive part 210, 211 of each wire 21, 22, and a main insulating envelope 20 around both isolated wires 21, 22. But other types of insulating envelopes, such as for example a single unique insulating envelope are compatible with the disclosed principles. At least one electrode 30A, 30B of a pair of electrodes, (or each electrode 30A, 31 A, 30B-31 B, of a pair of electrodes depending on the variant) comprises a first conductive part 300 being partially cylindrical around an axis. For example the first conductive part 300 is metallic. The term conductive implies a high level of electrical conductivity. The form of the first conductive part 300 is typically closed to a semi-cylinder, but with an angle strictly less than 180°as illustrated in the figures 3a, 3b, 4a, 4b. Indeed two electrodes with a first conductive part 300 of an angle of 180°would be in short circuit w hen mounted on the power cord. Any partially cylindrical form with an angle less than 180° is compatible with the disclosed principles. The axis of the partially cylindrical conductive part 300 of the electrode 30A, 31 A, 30B, 31 B is longitudinal to the electrode 30A, 31A, 30B, 31 B and perpendicular to the cross section plan of figures 3a, and 3b. The electrodes 30A, 31 A, 30B, 31 B are longitudinally mounted on the power cord 10. In other words the axis of the electrode partial cylinder is also the axis of the power cord 10. According to this specific and non-limiting embodiment, the plurality of spikes 301, 302, 311, 312 of the electrode 30A, 31 A, 30B, 31 B originate from the partially cylindrical conductive part 300 of the electrode 30A, 31 A, 30B, 31 B and are directed towards the axis of the partially cylindrical conductive part 300.

In an advantageous variant, at least one spike 301, 302, 311, 312 is a contiguous blade of a same material along the axis of the partially cylindrical conductive part 300. In another variant (not represented), the spikes are conical, and directed towards the axis in the cross section view. In that variant the spikes are a discontinuous blade of a same material along the axis of the partially cylindrical conductive part 300. For the sake of clarity all the spikes 301, 302, 311, 312 of the electrodes 30A, 31 A, 30B, 31 B are represented with a same form and regularly distributed around the electrodes 30A, 31 A, 30B, 31 B. But any arrangement and geometry of the spikes on the first conductive part 300, adapted to increase the capacitive coupling of the electrodes 30A, 31A, 30B, 31 B is compatible with the disclosed principles.

In an advantageous variant, wherein the spikes 301, 302, 311, 312 are regularly distributed around the first conductive part 300, each spike 301, 302, 311,312 occupies a surface of the first conductive part 300 corresponding to a first angle $\theta_1$ of the first partially cylindrical conductive part 300. An interval between two consecutive spikes 301, 302 further corresponds to a second angle $\theta_2$ of the first partially cylindrical conductive part 300. A filling factor $\alpha$ is defined as a ratio of the second angle $\theta_2$ over a sum of the first angle $\theta_1$ and the second angle $\theta_2 : \alpha = \dfrac{\theta_2}{\theta_1 + \theta_2}$.

## CONDUCTIVE ELECTRODES EMBODIMENT

According to a specific and non-limiting embodiment of the disclosed principles illustrated in Figure 3a, the spikes 301, 302 of the electrodes 30A, 31 A, in any of the described variant above, are conductive. The spikes 301, 302 are for example made of a same conductive material as the first partially cylindrical part 300 of the electrode 30A. For example, the spikes 301, 302 are also metallic. According to this specific embodiment, the conductive spikes 301, 302 have a length strictly smaller than a thickness of the overall insulating envelope 20, 211, 221 of the power cord 10. As the length of the spikes 301, 302 is *strictly* less than the thickness of the insulating envelope 20, 211, 221 of the power cord 10, the conductive spikes 301, 302 do not enter in contact with the conductive part 210, 220 or the wire 21, 22 so as to avoid an electrical short circuit of the electrode 30A, 31 A.

Considering *a* as the radius of the conductive part 210, 220, *b* the radius of the first partially cylindrical conductive part 300 of the electrode 30A, 31 A, and / a length of the spikes 301, 302 corresponding to their penetration depth in the insulating envelope 20, 211, 221, it can be demonstrated that the equivalent capacitance $C_{eq}$ induced between the internal conductive part 210, 220 of the wire 21, 22 of radius *a*, and the electrode 30A, 30B according to the disclosed principles could be written as:

$$C_{eq} = C_1 F_{increase}(\alpha, l)$$

Where :

$C_1$ is the capacitance induced between the internal conductive part 210, 220 of the wire 21, 22 and the electrode 30A, 31 A without any spike (I=0)

$$F_{increase}(\alpha, l) = (1 - \alpha) + \alpha \frac{\ln\left(\frac{b}{a}\right)}{\ln\left(\frac{b-l}{a}\right)} ; \qquad \alpha = \frac{\theta_2}{\theta_1 + \theta_2} :$$

"filling" factor.

Fincrease represents the increase factor of the capacitance induced by the electrode 30A, 31 A (i.e. $C_{H1}$ or $C_{N2}$) expressed as function of its geometrical parameters a and I.

For a penetration of the conductor of 1.2mm, corresponding to a practical realization using for example a lamp power cord, it can be calculated that the capacitances are multiplied by 1, 2.5, 3 and 4 for $\alpha$ equals respectively to 0 (no penetration of the conductor), 1/2, 2/3 and 1.

Practically using two electrodes 30A, 31 A mounted around a lamp power cord according to the disclosed principles, with a spike length in the range of 1.2 mm and a filling factor in the range of 2/3, the harvested energy improvement approaches a factor of ten. In other words, the amount of harvested energy from conductive electrodes 30A, 31 A according to the described embodiment is multiplied by ten compared to the harvested power energy only partially cylindrical conductive electrodes 100, 101 without any spikes 301, 302.

## METALLO-DIELECTRIC ELECTRODES EMBODIMENT

According to another specific and non-limiting embodiment of the disclosed principles illustrated in Figure 3b, the spikes 311, 312 of the electrodes 30B, 31 B, in any of the described variant above, are made in a dielectric material. The dielectric spikes 311,312 are fixed on the surface of the first conductive partially cylindrical part 300 of the electrode 30B. According to this specific embodiment, the dielectric spikes 311, 312 have a length smaller than or equal to a thickness of the overall insulating envelope 20, 211, 221 of the power cord 10. Advantageously the dielectric spikes 311, 312 are inserted in the insulating envelope 20, 211, 221 of the power cord 10 up to the conductive part 210, 220 of the power cord 10. As the material of the spikes 311, 312 is dielectric, no electrical short circuit is created as the dielectric spikes 311, 312 enter in contact with the conductive part 210, 220 of the wire 21, 22.

Considering the same notations as for the conductive embodiment (*a, b, l*), and further considering $\varepsilon_{r1}$ as a permittivity of the insulating envelope 20, 211, 221 of the power cord 10 and $\varepsilon_{r2}$ a permittivity of the dielectric material of the spikes 311,312, it can be demonstrated that the equivalent capacitance $C_{eq}$ induced between the internal conductive part 210, 220 of the wire 21, 22 of radius *a*, and the electrode 30B, 31 B according to the disclosed principles could be written as:

$$C_{eq} = C_1 F_{increase}(\alpha, \varepsilon_{r1,} \varepsilon_{r2,})$$

with $C_1$ the capacitance induced between the internal conductive part 210, 220 of the wire 21, 22 and the electrode 30B, 31 B without any spike (l=0), $F_{increase}$ represents the factor of increase for fixed $\alpha$ and permittivity of the used material.

$$F_{increase}(\alpha, \varepsilon_{r1,} \varepsilon_{r2,}) = (1 - \alpha) + \alpha \frac{\varepsilon_{r2}}{\varepsilon_{r1}}$$

$$\alpha = \frac{\theta_2}{\theta_1 + \theta_2}$$

Practically, from the above formula it can be calculated that using two metallo-dielectric electrodes 30B, 31 B mounted around a lamp power cord according to the disclosed principles, with spikes 311, 312 of a length in the range of 1.4mm, made in a dielectric material of permittivity 8, and a filling factor in the range of 2/3, the harvested energy improvement approaches a factor of four. In other words, the amount of harvested energy from metallo-dielectric electrodes 30B, 31 B according to the described embodiment is multiplied by four compared to the harvested energy from only partially cylindrical conductive electrodes 100, 101 without any spike. Metallo-dielectic electrodes 30B, 31 B according to the disclosed principles are easier to install on power cords 10 than the electrodes 30A, 31A according to the conductive embodiment, as it does not matter whether the dielectric spikes 311, 312 enter in contact with a conductive part 210, 220 of the power cord. But the amount of energy harvested from the metallo-dielectric electrodes 30B, 31 B is smaller than an amount of energy harvested from electrodes 30A, 31 A according to the conductive embodiment in similar conditions.

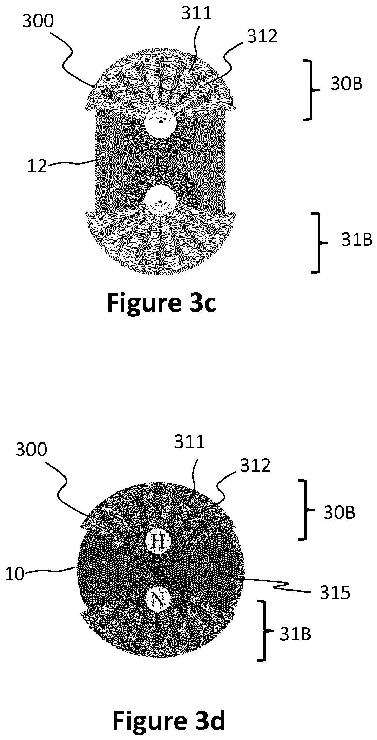

**Figure 3c** and **Figure 3d** illustrate two further specific and non-limitative embodiments of the disclosed principles. **Figure 3c** represents a cross section of a power cord 12 of a different form, the section of the power cord 12 being ovoid and not fully circular. Figure 3c represents two metallo-dielectric electrodes 30B, 31 B mounted around the power cord 12, wherein each of the metallo-dielectric electrodes 30B, 31 B comprises a partially cylindrical first conductive part 300, and a plurality of spikes 311, 312 made of a dielectric material and inserted in an insulating envelope of the power cord 12 up to a conductive part of the power cord. Similarly, the disclosed principles are also applicable to conductive electrodes according to the conductive embodiment, wherein the conductive electrodes are mounted around an ovoid power cord (not represented). **Figure 3d** represents yet another embodiment of two metallo-dielectric electrodes 30B, 31 B mounted around a power cord 10, wherein both electrodes are further connected together by a piece of dielectric material 315. Such a configuration wherein the two electrodes 30B-31 B constitute a single dielectric piece of material being partially metalized is advantageous as it easier to manufacture and to deploy on power cords.

**DIPOLE TYPE ANTENNA AS ELECTRODES EMBODIMENT**

**Figure 4a** illustrates a dipole type antenna 40 according to a specific and non-limiting embodiment of the disclosed principles. For example, the antenna 40 is adapted to receive wireless signals in the Ultra High Frequency (UHF) band. But any other type of antenna adapted to receive wireless signals from any other radio frequency band is compatible with the disclosed principles. According to this embodiment, the dipole type antenna 40 comprises two arms 41, 42, wherein each arm 41, 42 comprises at least two conductive strips 501, 502, 503, 504. For the sake of clarity, the principles will be described with two pairs of two conductive strips 501-502, 503-504, but a dipole type antenna with any number of pairs of conductive strips mounted around the power cord is compatible with the disclosed principles. The dipole type antenna 40 comprises a first arm 41 and a second arm 42, wherein the first arm 41 comprises two conductive strips 501, 502 wrapped around a power cord 10 as illustrated in **Figure 4b.** Similarly the second arm 42 comprises two further conductive strips 503, 504 (not represented on Figure 4b) wrapped around the power cord 10 at a short distance of the first arm 41. Preferably, the further conductive strips 503, 504 of the second arm 42 are aligned with the conductive strips 501, 502 of the first arm 41 as they are wrapped around the power cord 10, 12. But the disclosed principles are not limited to a first 41 and a second 42 arms with aligned conductive strips 501, 503 along the power cord 10, 12.

According to specific and non-limiting variants, a pair 501-502, 503-504 of conductive strips of an arm 41, 42 of the dipole type antenna 40 is a pair of electrodes 100-101, 30A-31 A, 30B-31 B of any of the variants or embodiments described in figures 1, 2a, 3a, 3b, 3c or 3d.

The dipole type antenna 40 has two inputs A, B, referred as the first input A and the second input B. The first input A is for example located on one of the conductive strips 501, 502 of the first arm 41, the second input B being located on one of the further conductive strips 503, 504 of the second arm 42. In case of aligned conductive strips along the power cord 10, 12, the first A and the second B inputs of the dipole type antenna 40 are located on aligned wrapped conductive strips 501, 503. As both antenna inputs A, B are connectable to an integrated circuit, the first A and the second B inputs are advantageously located on an extremity of respectively a conductive strip 501 of the first arm 41 and a further conductive strip 503 of the second arm 42, both extremities facing each other, as the conductive strips are wrapped around the power cord 10, 12.

As shown in **Figure 4a**, each arm 41, 42 of the dipole type antenna 40 (i.e. the half-dipole to be wrapped around the power cord 10, 12), is composed by two conductive strips 501, 502 of length L and width w separated by a slot of width e. The two wrapped conductive strips 501, 502 corresponding to each arm 41, 42 of the dipole are electromagnetically coupled. Separating the two conductive strips 501, 502 of an arm by a short slot e enables to turn the two conductive strips 501, 502 wrapped around the power cord 10, 12 into two electrodes adapted to harvest an energy from the power cord, according to any embodiment or variant of the disclosed principles. Moreover as the slot e remains small (for example one millimeter for a power cord of five millimeters diameter), the two conductive strips 501, 502 wrapped around the power cord are electromagnetically coupled so as to realize a single arm 41 of the dipole antenna 40.

The length L is approximately equal to $\lambda/4$ where $\lambda$ is the wavelength of the RF central operating frequency. A deviation from $\lambda/4$ depends on the current values of $w$, e and the permittivity of the insulating material used in the power cord 10, 12. The theoretical overall length of a dipole is a half-wavelength (= 2x quarter-wavelengths) of its intended operating radio frequency. That is applicable to a theoretical infinitely thin wire dipole in free space. The length of a practical dipole is generally, more or less slightly shorter than half-wavelength and should take into account a number of effects, among them:

- The "wire" cross-section shape and size; according to the disclosed principles, it is a strip of rectangular section with a cylinder shape. Larger is the strip section shorter is the dipole. The cylindrical shape, in comparison with a flat strip has a negligible effect.

- The surrounding medium; according to the disclosed principles, the strip is bonded on the power cord, and thus, the dielectric permittivity of the sheath surrounding the wires of the power cord has a further effect on the length of the dipole. As a first approximation the length is reduced by a factor equal to: Root-square [(Relative permittivity +1)/2]; where Relative permittivity is the Relative permittivity of the sheath material.

A practical length of a conductive strip 501, 502, 503, 504 according to the disclosed principles is thus smaller than a quarter of the wavelength of the operating frequency, for example within a range of 20%. Taking as an example a relatively narrow strip dipole ( ~2 mm width) bonded on a power cord 10, 12, the length of the dipole at the central frequency of 915 MHz, taking into account all the above effects, can be determined via electromagnetic simulations equal to 130 mm (instead of 164 mm in free-space).

In another example, a guided wavelength can be determined for a specific dipole type antenna 40 according to the disclosed principles. As it is known by the skilled in the art, the guided wavelength is the wavelength of the input signal as it is changed in comparison with free space wavelength when all the effects cited above are taken into account. For example the guided wavelength corresponds to a guided wave in the conductive strips 501, 502, 503, 504. And the length of a conductive strip 501, 502, 503, 504 is advantageously determined as a quarter of the guided wavelength of an operating central radio frequency.

In a variant, the length of a conductive strip 501, 502, 503, 504 is determined as any multiple of a quarter of the guided wavelength of an operating central radio frequency. Increasing the length of the antenna 40 changes the performance of the antenna in reception/transmission of RF signals and improves the amount of energy harvested, but implies practical limitations for wrapping long conductive strips 501, 502, 503, 504 around the power cord 10, 12.

In a practical example, using a power cord cable of a lamp having 5 mm diameter section and operating at the central frequency of 915 MHz corresponding to the UHF RFID band in the United States, a conductive strip 501, 502, 503, 504 according to a specific and non-limiting embodiment of the disclosed principles has the following typical sizing values:

- L ~8cm

- W~6.5 mm

- e ~1 mm

In an advantageous variant, the conductive strips 501, 502, 503, 504 comprise a flexible conductive substrate, such as for example a flex circuit, which is a known technology for assembling electronic circuits by mounting electronic devices on flexible plastic substrates or transparent conductive polyester films. The flexibility of the substrate is advantageous as it facilitates the installation of the antenna 40 as a pair of partially cylindrical electrodes 100, 101 on the power cord 10, 12, as depicted in figure 1. But any other type of substrate is compatible with the disclosed principles, including rigid conductive substrates with a partially cylindrical form of various diameters to be wrapped around power cords 10, 12 of various diameters.

In a first example, where the electrodes 100, 101 are partially cylindrical as depicted in figure 1, the conductive strips 501, 502, 503, 504 are entirely made of the flexible substrate. In another example, where the electrodes 30A, 31 A, 30B, 31 B comprise spikes 301, 302, as illustrated in figures 3a to 3d, only the first conductive part 300 is made of the flexible conductive substrate. The spikes 301, 302 however are in a rigid material (conductive or dielectric depending on the embodiments), so as to have the capability to penetrate in the insulating envelope of the power cord. In case the first conductive part 300 is made of the flexible substrate, its form is rectangular, and the spikes 301, 302 are perpendicular to the rectangular surface of first conductive part 300. In case the first conductive part 300 is made of the rigid conductive material with a partially cylindrical form, the spikes 301, 302 originating from the first conductive part 300 are directed towards the axis of the partial cylinder.

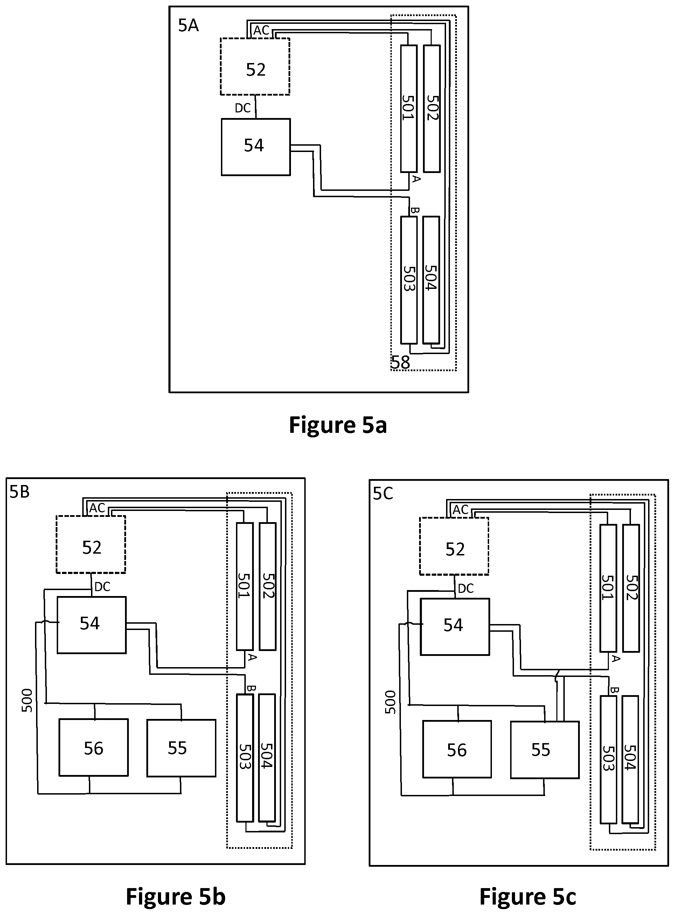

**Figure 5a** depicts a wireless tag device 5A adapted to harvest an energy from a power cord according to a specific and non-limiting embodiment of the disclosed principles. The wireless tag device is for example a RFID tag device. For the sake of clarity the tag device is described as a RFID tag device but any other kind of wireless tag device, such as for example a Bluetooth tag is compatible with the disclosed principles. The RFID tag device 5A comprises a RFID (or Bluetooth) integrated circuit 54 connected to a dipole type antenna 58 according to any embodiment or variant described above. The RFID integrated circuit 54 and the dipole type antenna 58 constitute a wireless network interface for sending / receiving a modulated RF carrier to / from a wireless interrogator. The wireless network interface belongs to a set comprising:

- A UHF RFID Air interface for the 860 MHz-960 MHz band, following the national regulations;
- A UHF RFID Air interface for the 433 MHz band following the national regulations;
- A RFID Air interface for the ISM 2.4 GHz band following the national regulations;
- A RFID Air interface for the 5.2 - 5.8 GHz band following the national regulations.

More generally any wireless network interface allowing to send / receive information to / from one or more wireless tag devices is compatible with the disclosed principles.

The RFID integrated circuit 54 is configured to receive its operating energy from a modulated RF carrier captured by the dipole type antenna 58, and to send a backscattered reply. The dipole type antenna 58 is further adapted to harvest a further energy from the power cord according to any embodiment or variant described above. The dipole type antenna 58 comprises two arms, wherein each of the two arms comprises a pair of two conductive strips 501-502, 503-504, adapted to be wrapped around the power cord and to harvest an energy from the power cord. Each arm of the dipole antenna 58 is a pair of electrodes according to any embodiment and/or variant of the disclosed principles. The RFID integrated circuit 54 is also adapted to receive the further energy harvested by each of the two arms of the dipole antenna 58. A possible example of such RFID integrated circuit 54 that can be further powered by another source or energy than the RF carrier reception, are the SL3S4011 from NXP, or the Monza X Chip from Impjin. Any RFID integrated circuit 54 that can be powered by another source or energy than the RF carrier reception is compatible with the disclosed principles. Optionally an energy storing module 52 stores an energy being harvested by the two electrodes 501, 502 mounted around the power cord, and not used by the integrated circuit 54. The energy storage module for example comprises a storage capacitor and a full wave rectifier comprising four diodes adapted to convert an analog current AC input providing from the electrodes 501, 502 into a direct current DC output. A possible value of the storage capacitor is $22\mu F$, and the four diodes are for example small signal fast switching diodes 1N4148 from Vishay Semiconductors. An example of energy storing module is also illustrated in figure 1 as an electrical circuit 11.

Powering a passive RFID tag device 5A with an energy harvested from a power cord is advantageous as it allows to extend the coverage of the RFID system: the RFID tag uses the harvested energy from the power cord in addition to the energy received from the reception of the modulated RF carrier by the dipole antenna, so as to send back the backscattered reply. Typically by powering a SL3S4011/4021 integrated circuit from NXP using the capacitor stored energy, the read sensitivity is improved by 5 dB (from -18 dBm to -23 dBm) while the write sensitivity is improved by up to 12 dB (from -11 dBm to - 23 dBm). That translates in terms of range by doubling the read range and by multiplying the write range by a factor of 4.

Moreover, harvesting an energy from a power cord by the dipole type antenna according to the disclosed principles is advantageous as it does not require to deploy a dedicated set of electrodes for harvesting an energy from the power cord.

**Figure 5b** depicts a wireless tag device 5B adapted to harvest an energy from a power cord according to another specific and non-limiting embodiment of the disclosed principles. The wireless tag device 5B, for example a RFID tag device comprises the same elements as the wireless tag device 5A, i.e. a RFID integrated circuit 54, a dipole antenna 58 being adapted to capture an operating energy from a modulated RF carrier and being further adapted to harvest a further energy from a power cord according to the disclosed principles. Optionally the wireless tag device 5B further comprises an energy storage module 52. In addition, and according to this specific and non-limiting embodiment, the RFID tag device 5B further comprises a sensing 55 and computing 56 hardware being powered with the harvested energy. Powering such an active RFID tag device 5B with an energy harvested from a power cord is advantageous as it enables the deployment of battery less sensing RFID tag devices in smart home or building environments. The RFID tag device 5B for example comprises an ultra-low power microcontroller 56. The RFID tag device further comprises a sensor 55 configured to measure a variety of data, such as for example and without limitation an ambient temperature, an atmospheric pressure, a local magnetic field, .... The sensor 55, the microcontroller 56 and the RFID integrated circuit 54 are interconnected by a bus 500, such as for example an I2C interface. The I2C interface is a two-wire interface supported by many embedded systems, such as computers or electronic devices. The I2C functionality enables writing/reading information in a memory of the RFID tag device 5B, such as a data measured by the sensor 55, and then made available to a RFID interrogator via the RFID integrated circuit 54. According to different variants, the memory is a standalone memory (not represented) or included in the sensor 55, or in the microcontroller 56 or in the RFID integrated circuit 54.

**Figure 5c** depicts a wireless tag device 5C adapted to harvest an energy according to yet another specific and non-limiting embodiment of the disclosed principles. The wireless tag device 5C is mounted around a power cord, powering a specific device (not represented) such as a personal computer, a TV set, or any kind a device that can be switched on and off. In that example, the wireless tag device 5C is further adapted to detect that the specific device being powered by the power cord is being switched on or switched off. Detecting that an external device is being switched on or off may be interesting for various data mining or Internet of Things applications. To that end the wireless tag device 5C, for example a RFID tag device comprises the same elements as the wireless tag device 5B, i.e. a RFID integrated circuit 54, a dipole antenna 58 being adapted to capture an operating energy from a modulated RF carrier and being further adapted to harvest a further energy from a power cord according to the disclosed principles, an optional energy storage module 52 and a micro-controller 56. The sensor 55 or device 5B is replaced in this embodiment by an impulse detector 57, being connected to the dipole antenna 58. The microcontroller 56 is coupled in signal communication 500 to the impulse detector 57. The impulse detector 57, is operative to detect when the specific device being powered by the power cord, is being switched on or off. More precisely, the impulse detector 57 is operative to receive an impulse response from the conductive strips 501, 502, 503, 504 of the dipole antenna 58, mounted around the power cord. In a variant (not represented), the impulse detector 57 is merged with the RFID integrated circuit 54 in a single integrated circuit. The impulse detector 57 is operative to provide one of a single alert signal and a plurality of alert signals for the microcontroller 56 in response to the impulse response. The impulse response includes one of a single impulse waveform and a plurality of impulse waveforms in a time period. The impulse detector 57 generates the single alert signal when the impulse response includes the single impulse waveform. The impulse detector 57 generates the plurality of alert signals when the impulse response includes respective ones of the plurality of impulse waveforms. The microcontroller 56 is operative to determine a nature of the impulse response. The nature is determined as a switch-ON response when the single alert signal is received. The nature is determined as a switch-OFF response when the plurality of alert signals are received. The microcontroller 56 and the impulse detector 57, are advantageously powered from energy harvested from the power cord according to any variant or embodiment of the disclosed principles.

In a first variant of any of the previously described embodiment, the wireless tag device 5A, 5B, 5C is a battery less device and is further powered only with the harvested energy, meaning that the wireless tag device 5A, 5B, 5C is powered from the harvested energy in addition to the energy received by the antenna from the RF carrier. In a second variant of any of the previously described embodiment, the wireless tag device 5A, 5B, 5C comprises a battery and is further powered also with the harvested energy. Powering the device comprising a battery with an energy harvested from a power cord is advantageous as it allows to preserve the battery and to extend its duration.

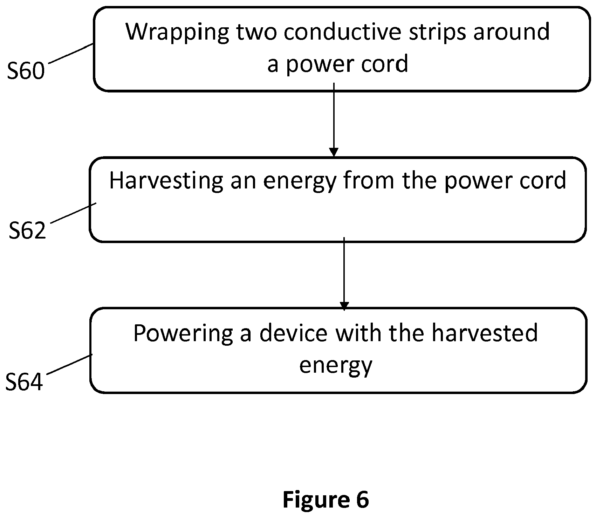

**Figure 6** describes a method for powering a device from an energy harvested from a power cord according to a specific and non-limiting embodiment of the disclosed principles. The device comprises a dipole type antenna of two arms, adapted to receive radio frequency signals. Each of the two arms of the antenna comprises two conductive strips.

In the step S60, the two conductive strips of each arm are wrapped around a power cord, and kept electrically disconnected. As the two conductive strips are mounted around the power cord, a short separating slot prevents both conductive strips to be in short circuit. Wrapping two electrically disconnected conductive strips around a power cord allows to obtain two electromagnetically coupled electrodes capable of harvesting an energy from the power cord, and to serve as an arm of a dipole type antenna for receiving RF signals.

In the step S62, an energy is harvested from the power cord by each of the two arms of the dipole antenna.

In the step S64, the device, being for example a wireless RFID tag is powered with the energy harvested from the power cord by its advantageous dipole type antenna.

**Claims**

1. A device (5A, 5B, 5C) comprising a dipole type antenna (40, 58) of two arms (41, 42) adapted to receive a RF signal, wherein each of the two arms (41, 42) comprises two conductive strips (501, 502, 503, 504) adapted to:

   - be wrapped around a power cord (10, 12) with a separating slot keeping the two conductive strips (501, 502, 503, 504) electrically disconnected,
   - harvest an energy from the power cord (10, 12).

2. The device (5A, 5B, 5C) according to claim 1, wherein the separating slot is short and the two conductive strips (501, 502, 503, 504) are electromagnetically coupled.

3. The device (5A, 5B, 5C) according to any of claims 1 to 2, wherein each of the two conductive strips (501, 502, 503, 504) comprises a flexible substrate.

4. The device (5A, 5B, 5C) according to any of claims 1 to 3, wherein the device (5A, 5B, 5C) is configured to operate at a central radio frequency, each of the two conductive strips (501, 502, 503, 504) having an equal length being a quarter of a guided wavelength of the central radio frequency.

5. The device (5A, 5B, 5C) according to any of claims 1 to 4, further comprising an integrated circuit (54) adapted to receive an operating energy from a modulated RF carrier captured by the dipole type antenna (58), the integrated circuit (54) being further adapted to be powered by the harvested energy.

6. The device (5A, 5B, 5C) according to any of claims 1 to 5, wherein the device (5A, 5B, 5C) is a wireless tag.

7. The device (5A, 5B, 5C) according to claim 6 wherein the device (5A, 5B, 5C) is a RFID tag.

8. The device (5A, 5B, 5C) according to any of claims 1 to 7, further comprising a capacitor adapted to store the harvested energy

9. The device (5A, 5B, 5C) according to any of claims 1 to 8, further comprising a sensor (55) adapted to be powered at least by the harvested energy.

10. The device (5A, 5B, 5C) according to any of claims 1 to 9, further comprising an impulse detector (57) adapted to be powered at least by the harvested energy.

**11.** The device (5A, 5B, 5C) according to any of claims 1 to 10, wherein at least one of the two conductive strips (501, 502, 503, 504) comprises a plurality of spikes (301, 302, 311,312) inserted in an insulating envelope (20, 211, 221) of the power cord (10, 12).

**12.** The device (5A, 5B, 5C) according to claim 11, wherein the at least one of the two conductive strips (30A, 31 A, 30B, 31 B) comprises a first rectangular conductive part (300), the spikes (301, 302, 311,312) originating from the first rectangular conductive part (300) and being perpendicular to the first rectangular conductive part (300).

**13.** The device (5A, 5B, 5C) according to claim 11, wherein the at least one of the two conductive strips (30A, 31 A, 30B, 31 B) comprises a first conductive part (300) being partially cylindrical around an axis, the spikes (301, 302, 311, 312) originating from the first conductive part (300) and being directed towards the axis.

**14.** A method for powering a device (5A, 5B, 5C) comprising a dipole type antenna (40, 58) of two arms (41, 42) adapted to receive a RF signal, each of the two arms (41, 42) comprising two conductive strips (501, 502, 503, 504), the method comprising:

- wrapping the two conductive strips (501, 502, 503, 504) around a power cord (10, 12) with a separating slot keeping the two conductive strips (501, 502, 503, 504) electrically disconnected;
- harvesting an energy from the power cord (10, 12) and
- powering the device (5A, 5B, 5C) with the harvested energy.

**15.** The method according to claim 14, wherein the separating slot is short and the two conductive strips (501, 502, 503, 504) are electromagnetically coupled.

**Figure 1**

**Figure 2a**

**Figure 2b**

**Figure 2c**

## Figure 2d

## Figure 2e

**Figure 3a**

**Figure 3b**

300   311
          312

30B

12

31B

**Figure 3c**

300   311
          312

30B

10

315

31B

**Figure 3d**

502

504

L~λ/4

L~λ/4

w

e

A B

501

41

40 42

503

**Figure 4a**

10 502

501 **Figure 4b**

**Figure 5a**

**Figure 5b**

**Figure 5c**

S60 — Wrapping two conductive strips around a power cord

S62 — Harvesting an energy from the power cord

S64 — Powering a device with the harvested energy

**Figure 6**

Europäisches
Patentamt

European
Patent Office

Office européen
des brevets

# EUROPEAN SEARCH REPORT

Application Number

EP 16 30 6628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/147583 A1 (LAPP SIEGBERT [DE]) 17 June 2010 (2010-06-17) | 1-10,14, 15 | INV. H01Q1/22 |
| A | * paragraphs [0152] - [0170] * <br> * paragraphs [0189], [0190] * <br> * figures 7-9 * | 11-13 | G01R19/25 <br> H01Q1/46 <br> H01Q9/06 <br> G06K19/07 |
| | ----- | | |
| Y | US 2008/055092 A1 (BURR JEREMY [US]) 6 March 2008 (2008-03-06) | 1-10,14, 15 | |
| A | * paragraphs [0018] - [0022] * <br> * figures 1B, 2 * | 11-13 | |
| | ----- | | |
| A | HONDA MASANOBU ET AL: "Wireless temperature and illuminance sensor nodes with energy harvesting from insulating cover of power cords for building energy management system", 2015 IEEE PES ASIA-PACIFIC POWER AND ENERGY ENGINEERING CONFERENCE (APPEEC), IEEE, 15 November 2015 (2015-11-15), pages 1-5, XP032848243, DOI: 10.1109/APPEEC.2015.7381080 [retrieved on 2016-01-12] * the whole document * | 1-15 | |
| | ----- | | **TECHNICAL FIELDS SEARCHED (IPC)** |
| A | US 2016/351994 A1 (LOUZIR ALI [FR] ET AL) 1 December 2016 (2016-12-01) * the whole document * | 1-15 | H02J <br> H01Q <br> G06K <br> H01B <br> G01R |
| | ----- | | |

The present search report has been drawn up for all claims

| Place of search | Date of completion of the search | Examiner |
|---|---|---|
| The Hague | 24 May 2017 | Culhaoglu, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6628

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2017

| Patent document cited in search report | Publication date | Patent family member(s) | Publication date |
|---|---|---|---|
| US 2010147583 A1 | 17-06-2010 | DE 102007024212 A1<br>EP 2147443 A1<br>US 2010147583 A1<br>WO 2008138799 A1 | 20-11-2008<br>27-01-2010<br>17-06-2010<br>20-11-2008 |
| US 2008055092 A1 | 06-03-2008 | NONE | |
| US 2016351994 A1 | 01-12-2016 | EP 3098609 A1<br>US 2016351994 A1 | 30-11-2016<br>01-12-2016 |

EPO FORM P0459

For more details about this annex : see Official Journal of the European Patent Office, No. 12/82